# EUROPEAN PATENT SPECIFICATION

(11) **EP 0 450 513 B1**
(45) Date of publication and mention of the grant of the patent: **27.10.1999**
(21) Application number: 91104991.4
(22) Date of filing: 28.03.1991
(51) Int. Cl.: C08K 5/00, C08L 25/04, C08J 9/14

(54) **Polymeric composition comprising transient foam control reagent**
Polymermischung mit einem Schaumkontrollmittel
Composition polymère contenant un agent de contrôle de mousse

(30) Priority: 06.04.1990 US 505639
(43) Date of publication of application: 09.10.1991
(73) Proprietor: THE DOW CHEMICAL COMPANY, Midland, Michigan 48674 (US)
(72) Inventor: Rhoads, Timothy W., Granville, Ohio 43023 (US); Kadota, Takao, Utsunomiya-shi, Tochigi-ken 320 (JP); Suh, Kyung W., Granville, Ohio 43023 (US); Stobby, Willia G., Johnstown, Ohio 43031 (US)
(74) Representative: Sternagel, Hans-Günther, Dr.

(56) References cited:
- EP-A- 0 343 473
- BE-A- 858 930
- GB-A- 773 125
- GB-A- 974 715
- GB-A- 2 043 648
- US-A- 2 532 242
- US-A- 3 293 196
- US-A- 4 042 541
- US-A- 4 486 550
- US-A- 4 520 136

## Description

This invention relates to a process for preparing a polymeric foam, which process comprises (a) melt processing under a pressure in excess of ambient pressure a polymeric composition comprising at least 50 percent by weight of an alkenyl aromatic polymer, a volatile blowing agent and a transient foam control agent to form a flowable mixture and (b) extruding the mixture through a die into a zone of lower pressure where the blowing agent is activated to expand the polymeric composition to a cellular structure.

Alkenyl aromatic polymer foams such as polystyrene foams have found a wide variety of usages including insulation, cushion packaging, and the formation of molded articles such as cups, trays, and the like. When utilized as an extruded board insulating material, a fugitive blowing agent is normally incorporated into the heat plastified polymer and the resulting mixture extruded to a zone of lower pressure and allowed to expand. Existing blowing agents preferentially include the chlorofluorocarbons (CFC's) due to their ease of use and the resulting exceptional foam properties. However, questions regarding the long term effect of CFC's in the environment have caused manufacturers to seek ways to reduce the quantity of CFC's required to produce a given density of foam (generally lower density foams utilize larger quantities of CFC's) or to utilize other, less effective blowing agents, which are not suspected of environmental damage. In order to accomplish these desirable ends it is necessary to provide a molten polymer mixture having improved (reduced) viscosity and other properties in order that reduced amounts of CFC's or other less effective blowing agents may be employed.

In the past, attempts have been made to utilize plasticizers and/or plasticizing blowing agents in polystyrene foams to aid in melt foaming, particularly where very low densities are desired. Such plasticizers have been found to have an adverse effect on the final foam properties, and in some instances have resulted in a permanent softening of the foam.

Crosslinking of the foam during foaming to stabilize cell formation has also been attempted. However, the use of crosslinking agents must be carefully controlled as insufficient crosslinking does not produce the desired stabilization and over crosslinking makes processing difficult. Moreover, crosslinking of such foams makes reprocessing of the foam scraps difficult.

Accordingly, the need still exists in the art for a means to prepare extruded alkenyl aromatic polymer foams to enable reduction or elimination of CFC blowing agents.

According to the preent invention there is provided a process for preparing a polymeric foam, comprising:
(a) melt processing under a pressure in excess of ambient pressure a polymeric composition comprising (i) at least 50 percent by weight of an alkenyl aromatic polymer, (ii) a volatile blowing agent and (iii) a transient foam control agent to form a flowable mixture and
(b) extruding the mixture through a die into a zone of lower pressure where the blowing agent is activated to expand the polymeric composition to a cellular structure,
the process being characterized in that the mixture comprises from about 0.05 to 15 percent by weight of a transient foam control agent which is compatible with the alkenyl aromatic polymer in the melt phase and acts to reduce the melt viscosity in the melt phase but is nonmiscible with and substantially nondetrimental to the polymer in the solid phase, the transient foam control agent being selected from the group consisting of C₂₋₃₀ aliphatic carboxylic and polycarboxylic acids and amide derivatives thereof; C₂₋₃₀ aliphatic and aromatic carbamates and carbamate esters and inertly-substituted derivatives of the foregoing; and mixtures of the foregoing transient foam control agents.

The effect of the transient foam control agent is to modify the melt rheology of the foamable polymeric composition, especially the primary alkenyl aromatic polymer constituent of the composition but not to interfere with desirable physical properties, particularly solid phase properties, of the polymeric composition. To accomplish this purpose it is necessary that the transient foam control agent be a solid that is nonmiscible with the alkenyl aromatic polymer at temperatures less than the glass transition temperature (Tg) of the polymer and subject to thorough dispersion into domains of sufficiently small size that no adverse effect on the physical properties of the polymer results. The composition in the solid phase may be more particularly described as a microdispersion of the transient foam control agent in the alkenyl aromatic polymer. The mixture is generally homogeneous and the transient foam control agent forms discrete non-interconnecting domains of particle size 0.1 to about 50 micrometers, thereby not detracting in appreciable degree from the polymer's physical properties in the solid phase.

At a temperature above the minimum foaming temperature of the alkenyl aromatic polymer, the transient foam control agent becomes compatible with the alkenyl aromatic polymer and preferably is also melted and effective to reduce the melt viscosity of the composition.

A very low density foam may be produced in accordance with the present invention by melt processing under a pressure in excess of ambient a polymeric composition comprising at least 50 percent by weight of an alkenyl aromatic polymer with a volatile blowing agent and the transient foam control agent to form a flowable mixture. A preferred melt processing temperature range when using alkenyl aromatic polymers is between 180°C and 230°C.The mixture is then extruded through a die to a zone of lower pressure where the blowing agent is activated to expand the composition to a cellular structure. This cellular foam may be thereafter exposed to atmospheric steam or hot air at a temperature such as between 80° to 115°C to cause further expansion of the foam to even lower densities. The exposure of the mixture to lower pressure and to steam or hot air preferably occurs sequentially after a period of aging the foam following its initial expansion. However, the process can take place substantially simultaneously in an on-line procedure whereby the extruded foam is immediately exposed to steam or hot air.

### Detailed Description of the Preferred Embodiments

Additional components of the expandable polymer composition may include polymers such as polyarylethers (especially polyphenylene oxide), polycarbonates, elastomers (especially polybutadiene, EPDM or styrene/butadiene block copolymer rubbers), polyethylene, etc. The expandable polymer composition of the present invention preferably includes at least 70 percent by weight of an alkenyl aromatic polymer resin. Preferably, this resin has a weight average molecular weight of between 100,000 to 300,000. Such molecular weight may be determined by gel permeation chromatography (GPC), for example.

By the term "alkenyl aromatic polymer" resin, is meant a solid polymer of one or more polymerizable alkenyl aromatic compounds and, optionally, at least one copolymerizable monomer. The polymer or copolymer comprises, in polymerized form, at least 70 percent by weight of polymer units derived from at least one alkenyl aromatic monomer having the general formula: 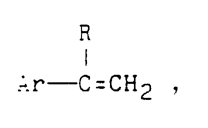 where Ar represents an aromatic hydrocarbon radical, or an aromatic halohydrocarbon radical of the benzene series, and R is hydrogen, a methyl group, or an ethyl group. Examples of such alkenyl aromatic polymers are the solid homopolymers of styrene, α-methylstyrene, o-methylstyrene, m-methylstyrene, p-methylstyrene, ar-ethylstyrene, ar-vinylxylene, ar-chlorostyrene, ar-bromostyrene, vinyl toluene, or the solid copolymers of one or more of such alkenyl aromatic compounds with other copolymerizable monomers such as acrylonitrile, anhydrides of maleic or itaconic acids, acrylic or methacrylic acid, or rubber-reinforced (either synthetic or natural) styrene polymers, and the like.

Blowing agents useful in the practice of the present invention are well known and may comprise solids or liquids which produce (decompose or volatilize) into gaseous products at extrusion temperatures. A preferred class of blowing agents includes halogenated hydrocarbon compounds having from 1 to 8 carbon atoms especially chlorofluorocarbons, hydrocarbon compounds having from 1 to 8 carbon atoms, low molecular weight alcohols, nitrogen carbon dioxide, water and mixtures thereof. When such compounds are used as the blowing agent, there can be from 10 to 200 gram, and preferably 50 to 150 gram of such blowing agent per kilogram of polymer composition. Especially preferred blowing agents include 1-chloro-1,1-difluoroethane (CFC-142b), 1-chloro-1,2,2,2-tetrafluoroethane (HCFC-124), 1,1,1,2-tetrafluoroethane (HCFC-134a), dichlorodifluoromethane (CFC-12), trichloromonofluoromethane (CFC-11), n-butane, iso-butane, n-pentane, isopentane, water, carbon dioxide, ethyl chloride, nitrogen, and mixtures thereof. A highly preferred blowing agent comprises a mixture of CO₂ and CFC-142b in weight ratios from 5/95 to 50/50. Generally such blowing agents as CFC-142b or mixtures with carbon dioxide are less effective in producing suitable foam properties and their use is not as practiced as the "hard" chlorofluorocarbons such as CFC-12. Thus a workable system to prepare suitable foams with CFC-142b blowing agent is greatly desired.

The transient foam control agent used in the practice of the present invention, preferably comprises from 0.1 to 10 percent, more preferably from 0.3 percent to 5.0 percent and most preferably from 0.5 to 3.0 percent by weight of the composition.

Suitable transient foam control agents are selected from C₂₋₃₀ aliphatic carboxylic acids or polycarboxylic acid compounds and amide derivatives thereof, C₂₋₃₀ aliphatic and aromatic carbamates and carbamate esters, inertly substituted derivatives of the foregoing, and mixtures thereof.

Specific examples of the foregoing list of transient foam control agents are succinic acid, glutaric acid, adipic acid, pimelic acid, suberic acid, azelaic acid, sebacic acid, methyl urea, benzene sulfonamide, cyanoacetamide, N,N',hexamethylene bisacetamide, m-nitrobenzamide, mannitol, piperazine bis-alkylcarbamate, piperazine bis-hydroxyethylcarbamate, etc.

In a particular preferred embodiment of the present invention the transient foam control agent is selected from C₄₋₁₀ aliphatic dicarboxylic acids and mixtures thereof. In particular, mixtures of the foregoing C₄₋₁₀ aliphatic dicarboxylic acids having a melting point from 110 to 130°C are highly preferred transient foam control agents. For example mixtures comprising succinic, glutaric, adipic, pimelic, suberic, azelaic and/or sebacic acids in molar percentages of at least 5 percent are especially desired. Highly preferred transient foam control agents comprise mixtures of adipic acid and sebacic acids, especially in weight ratios from 10/90 to 50/50. In a most preferred embodiment employing a mixture of the foregoing transient foam control agents, a eutectic mixture is employed, i.e. a 30/70 weight ratio for the use of a mixture of adipic/sebacic acids.

The transient foam control agent may be readily blended with the alkenyl aromatic polymer resin by dry blending, concentrate blending, or melt injection. Preferably, the transient foam control agent is fed directly into the extruder and melt processed with the alkenyl aromatic polymer resin, blowing agent, and other additives without the need for any additional mixing apparatus.

As is conventional, finely divided solid materials such as talc, calcium silicate, barium or zinc stearate, magnesium oxide, and the like can advantageously be incorporated with the polymer gel prior to expansion. Such finely divided materials aid in controlling the size of the cells and may be employed in amounts up to five percent by weight of the polymer. Fillers, pigments, lubricants, wetting agents, antioxidants, ignition resistant additives, and the like well known in the art can also be incorporated as desired.

In order that the invention may be readily more understood, reference is made to the following examples, which are intended to illustrate the invention, but are not to be taken as limiting the scope thereof. Unless stated to the contrary parts and percentages are based on weight.

### Example 1

The apparatus used in this example is a 3.2 centimeter screw type extruder having two additional zones for mixing and cooling at the end of usual sequential zones for feeding, melting, and metering. An opening for blowing agent injection is provided on the extruder barrel between the metering and mixing zones. At the end of the cooling zone, there is attached a die orifice having an opening of rectangular shape. The height of the opening, called die gap hereinafter, is adjustable while its width is fixed at 6.35 mm.

A granular polystyrene having a weight average molecular weight of about 200,000 was dry blended with a predetermined amount of a transient foam control agent. A small amount, 0.05 parts per hundred (pph) each of magnesium oxide and calcium stearate, about 0.2 pph talc, 0.03 pph pigment and 2.0 pph brominated fire retardant were mixed with the polymer granules. The mixture was fed into the extruder at an essentially uniform rate of about 4.54 kg (10 pounds) per hour. Various blowing agents were injected into the extruder in amounts identified in Table I. The extruder zones were maintained at 182°, 193°, and 204°C for the feeding, melting and metering, and mixing zones, respectively. The temperature of the cooling zone was adjusted so that the gel cooled to a uniform temperature of about 125°C. In Runs 1 and 2 blowing agents comprising CO₂ and CFC-142b (a "soft", environmentally acceptable, chlorofluorocarbon) were used. Foam production conditions are contained in Table I. Physical property values of the resulting foams are contained in Table II.

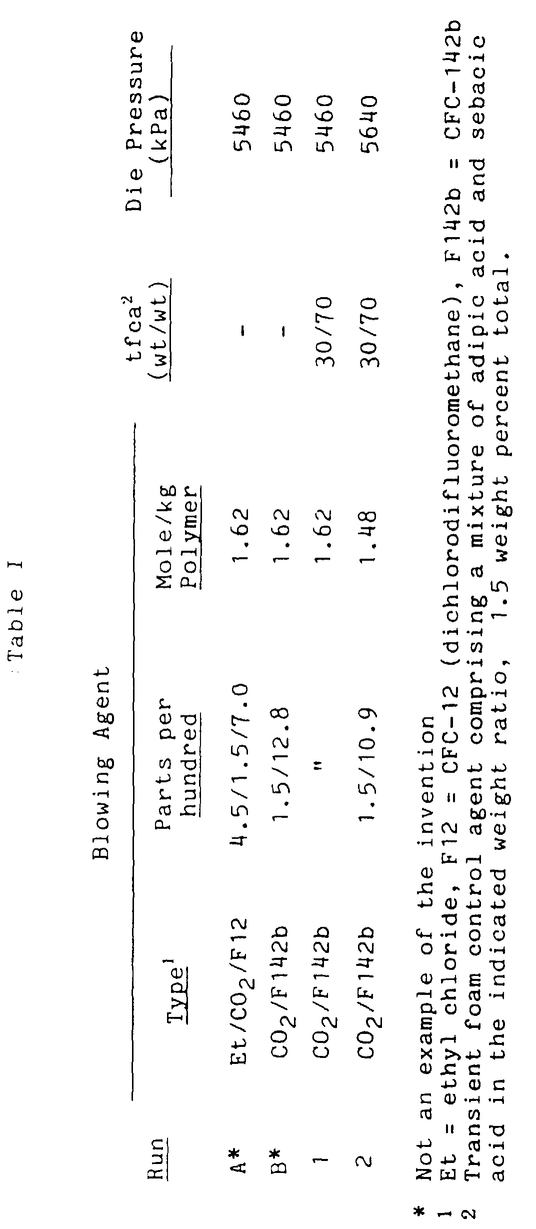

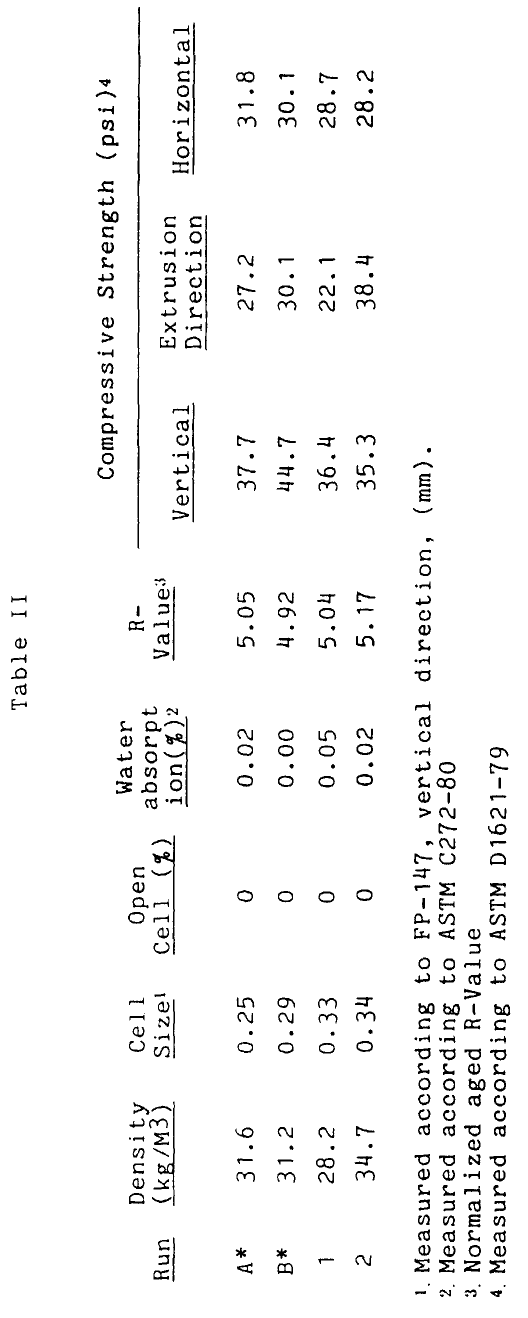

The results of Table II indicate that suitable polymer foams may be prepared according to the present invention utilizing blowing agents comprising "soft" CFC's such as CFC-142b and mixtures thereof with CO₂ when the transient foam control agents of the invention are also used. The foamed composition of Run 1 achieved reduced density without loss of other physical properties. The composition employed in Run 4 employed a reduced quantity of blowing agent (1.48 mol/kg polymer instead of 1.62, an 8.6 percent reduction) and still maintained acceptable physical properties for the resulting cured foam product.

## Claims

1. A process for preparing a polymeric foam, comprising:
(a) melt processing under a pressure in excess of ambient pressure a polymeric composition comprising (i) at least 50 percent by weight of an alkenyl aromatic polymer, (ii) a volatile blowing agent and (iii) a transient foam control agent to form a flowable mixture and
(b) extruding the mixture through a die into a zone of lower pressure where the blowing agent is activated to expand the polymeric composition to a cellular structure,
the process being characterized in that the mixture comprises from about 0.05 to 15 percent by weight of a transient foam control agent which is compatible with the alkenyl aromatic polymer in the melt phase and acts to reduce the melt viscosity in the melt phase but is nonmiscible with and substantially nondetrimental to the polymer in the solid phase, the transient foam control agent being selected from the group consisting of C₂₋₃₀ aliphatic carboxylic and polycarboxylic acids and amide derivatives thereof; C₂₋₃₀ aliphatic and aromatic carbamates and carbamate esters and inertly-substituted derivatives of the foregoing; and mixtures of the foregoing transient foam control agents.

2. The process according to claim 1, wherein the alkenyl aromatic polymer is the solid homopolymers of styrene.

3. The process according to claim 1 or 2, wherein the blowing agent comprises 1-chloro-1,1-difluoroethane.

4. The process according to any of claims 1 to 3, wherein the blowing agent comprises carbon dioxide.

5. The process according to any of claims 1 to 4, wherein the transient foam control agent comprises a mixture of aliphatic C₄₋₁₀ dicarboxylic acids.

6. The process according to any of claims 1 to 4, wherein the transient foam control agent comprises a mixture of adipic acid and sebacic acid.

7. The process according to claim 6, wherein the transient foam control agent comprises 10 to 50 percent by weight adipic acid and 50 to 90 percent by weight sebacic acid.

8. The process according to claim 6, wherein the transient foam control agent comprises an about eutectic mixture of adipic acid and sebacic acid.

## Patentansprüche

1. Verfahren zur Herstellung eines Polymerschaums, umfassend:
(a) Schmelzverarbeiten einer polymeren Zusammensetzung, die (i) wenigstens 50 Gew.-% eines aromatischen Alkenylpolymers, (ii) ein leichtflüchtiges Treibmittel und (iii) ein transientes Schaumkontrollmittel enthält, unter einem Druck über Umgebungsdruck, um eine fließfähige Mischung zu ergeben, und
(b) Extrudieren der Mischung durch eine Düse in einen Bereich niedrigeren Drucks, wobei das Treibmittel aktiviert wird, um die polymere Zusammensetzung zu einer cellularen Struktur zu expandieren,
wobei das Verfahren dadurch gekennzeichnet ist, daß die Mischung ungefähr 0,05 bis 15 Gew.-% eines transienten Schaumkontrollmittels enthält, das mit dem aromatischen Alkenylpolymer in der Schmelzphase kompatibel ist und dazu dient, die Schmelzviskosität in der Schmelzphase zu verringern, aber mit dem Polymer in der Festphase nicht mischbar ist und sich im wesentlichen nicht nachteilig auf das Polymer auswirkt, wobei das transiente Schaumkontrollmittel ausgewählt ist aus der Gruppe bestehend aus aliphatischen C₂- bis C₃₀-Carbon- und -Polycarbonsäuren und Amidderivaten davon, aus aliphatischen und aromatischen C₂- bis C₃₀-Carbamaten und -Carbamatestern und inert substituierten Derivaten der Vorstehenden und Mischungen der vorstehenden transienten Schaumkontrollmitteln.

2. Verfahren nach Anspruch 1, wobei das aromatische Alkenylpolymer ein festes Homopolymer von Styrol ist.

3. Verfahren nach einem der Ansprüche 1 oder 2, wobei das Treibmittel 1-Chlor-1,1-difluorethan enthält.

4. Verfahren nach einem der Ansprüche 1 bis 3, wobei das Treibmittel Kohlendioxid enthält.

5. Verfahren nach einem der Ansprüche 1 bis 4, wobei das transiente Schaumkontrollmittel eine Mischung aus aliphatischen C₄- bis C₁₀-Dicarbonsäuren enthält.

6. Verfahren nach einem der Ansprüche 1 bis 4, wobei das transiente Schaumkontrollmittel eine Mischung aus Adipinsäure und Sebacinsäure enthält.

7. Verfahren nach Anspruch 6, wobei das transiente Schaumkontrollmittel 10 bis 50 Gew.-% Adipinsäure und 50 bis 90 Gew.-% Sebacinsäure enthält.

8. Verfahren nach Anspruch 6, wobei das transiente Schaumkontrollmittel eine ungefähr eutektische Mischung von Adipinsäure und Sebacinsäure enthält.

## Revendications

1. Procédé pour préparer une mousse polymérique, comprenant :
(a) le traitement à l'état fondu, sous une pression dépassant la pression atmosphérique, d'une composition polymérique comprenant (i) au moins 50 % en poids d'un polymère alcénylé aromatique, (ii) un agent d'expansion volatile et (iii) un agent transitoire de réglage de la mousse pour former un mélange pouvant s'écouler, et
(b) l'extrusion du mélange à travers une filière dans une zone de plus faible pression où l'agent d'expansion est activé pour faire expanser la composition polymérique en une structure cellulaire,
le procédé étant caractérisé en ce que le mélange comprend d'environ 0,05 à 15 % en poids d'un agent transitoire de réglage de la mousse qui est compatible avec le polymère alcénylé aromatique dans la phase fondue et sert à réduire la viscosité à l'état fondu dans la phase fondue mais n'est pas miscible avec le polymère et pratiquement pas nuisible au polymère dans la phase solide, l'agent transitoire de réglage de la mousse étant choisi dans l'ensemble constitué par les acides polycarboxyliques et carboxyliques aliphatiques en C₂₋₃₀ et leurs dérivés amides ; les carbamates aliphatiques et aromatiques en C₂₋₃₀, les esters de type carbamate et leurs dérivés à substituants inertes ; et les mélanges des agents transitoires de réglage de la mousse qui précèdent.

2. Procédé selon la revendication 1, dans lequel le polymère alcénylé aromatique est un homopolymère solide de styrène.

3. Procédé selon la revendication 1 ou 2, dans lequel l'agent d'expansion comprend le 1-chloro-1,1-difluoroéthane.

4. Procédé selon l'une quelconque des revendications 1 à 3, dans lequel l'agent d'expansion comprend du dioxyde de carbone.

5. Procédé selon l'une quelconque des revendications 1 à 4, dans lequel l'agent transitoire de réglage de la mousse comprend un mélange d'acides dicarboxyliques en C₄₋₁₀ aliphatiques.

6. Procédé selon l'une quelconque des revendications 1 à 4, dans lequel l'agent transitoire de réglage de la mousse comprend un mélange d'acide adipique et d'acide sébacique.

7. Procédé selon la revendication 6, dans lequel l'agent transitoire de réglage de la mousse comprend de 10 à 50 % en poids d'acide adipique et de 50 à 90 % en poids d'acide sébacique.

8. Procédé selon la revendication 6, dans lequel l'agent transitoire de réglage de la mousse comprend un mélange correspondant à peu près à l'eutectique, de l'acide adipique et de l'acide sébacique.
